# EUROPÄISCHE PATENTSCHRIFT

(11) **EP 3 480 645 B1**
(45) Veröffentlichungstag und Bekanntmachung des Hinweises auf die Patenterteilung: **22.01.2025**
(21) Anmeldenummer: 18199787.5
(22) Anmeldetag: 11.10.2018
(51) Int. Cl.: B33Y 80/00, G02B 23/18

(54) **VERFAHREN ZUR HERSTELLUNG EINER FERNOPTISCHEN EINRICHTUNG**
METHOD FOR PRODUCING A REMOTE OPTICAL DEVICE
PROCÉDÉ DE FABRICATION D'UN DISPOSITIF OPTIQUE POUR LA VISION DE LOIN

(30) Priorität: 12.10.2017 AT 508692017
(43) Veröffentlichungstag der Anmeldung: 08.05.2019
(73) Patentinhaber: Swarovski-Optik AG & Co KG., 6067 Absam (AT)
(72) Erfinder: FORBES, Dale, 6060 Hall in Tirol (AT); FRECH, Christoph, 6065 Thaur (AT); LEITNER, Martin, 6020 Innsbruck (AT); NINDL, Daniel, 6020 Innsbruck (AT); ÖTTL, Peter, 6068 Mils (AT); SCHLETTERER, Florian, 6252 Breitenbach am Inn (AT); ZIMMERMANN, Andreas, 6166 Fulpmes (AT)
(74) Vertreter: Burger, Hannes

(56) Entgegenhaltungen:
- WO-A1-2015/200173
- WO-A1-2016/185405
- DE-A1- 102014 119 293
- US-A- 5 900 207
- US-A1- 2010 254 017
- US-A1- 2015 022 884
- US-A1- 2015 054 918
- US-A1- 2015 324 490
- US-B1- 9 709 713
- US-B1- 9 772 497
- JONATHAN ODOM: "Blade Runner Binoculars", 11 October 2017 (2017-10-11), XP054979752, Retrieved from the Internet <URL:https://www.youtube.com/watch?v=CClNOTj2SWc> [retrieved on 20190822]
- ANONYMOUS: "Deckard's Binoculars", FACEBOOK, 19 September 2017 (2017-09-19), XP002793788, Retrieved from the Internet <URL:https://www.facebook.com/replicapropforum/photos/deckards-binocularsinside-the-dark-future-of-blade-runner-2049-httpbitly2xjkbxxc/358950611195363/> [retrieved on 20190822]
- CRUJONES4433: "3d printed adapter from binoculars to phone", 12 June 2017 (2017-06-12), XP002793789, Retrieved from the Internet <URL:https://imgur.com/gallery/IeXDK> [retrieved on 20190822]

## Beschreibung

Die Erfindung betrifft ein Verfahren zur Herstellung einer fernoptischen Vorrichtung, insbesondere eines binokularen oder monokularen Fernrohrs, Teleskopes, Zielfernrohrs, Nachtsichtgerätes oder Entfernungsmessers, und/oder zumindest eines Zubehörteils und/oder zumindest eines Bedienteils und/oder zumindest eines Gehäuseteils der fernoptischen Vorrichtung, wobei die fernoptische Vorrichtung zumindest ein Gehäuse aufweist, gemäß dem Oberbegriff von Anspruch 1.

Ein Verfahren zur Herstellung eines Teleskops, bei dem ein Spiegel mittels eines 3D-Druckverfahrens hergestellt wird, ist aus der US9709713B1 bekannt geworden.

Die Verwendung von 3D-Druckverfahren ist weiters aus der US590020A, der US2015/054918A1, der US201/5324490A1, der US9772497B1, der US2015022884A1, der US2010/254017A1, der WO2015200173A1 sowie der DE102014119293A1 bekannt geworden.

Nachteilig an herkömmlichen Fertigungsmethoden zur Herstellung von fernoptischen Vorrichtungen, Teilen davon oder deren Zubehör sind der hohe Fertigungsaufwand und die damit verbundenen Kosten. Auch ist es mit den herkömmlichen Fertigungsmethoden nicht möglich, benutzerspezifische Maßanfertigungen der fernoptischen Vorrichtungen oder von Zubehörteilen anzufertigen.

Aufgabe der vorliegenden Erfindung ist es, die Nachteile des Standes der Technik zu überwinden und den Fertigungsaufwand von fernoptischen Vorrichtungen und deren Zubehör zu reduzieren und eine Individualisierbarkeit gemäß spezifischen Kundenbedürfnissen zu ermöglichen.

Diese Aufgabe wird durch ein Verfahren der eingangs genannten Art erfindungsgemäß mit dem Merkmalen des Anspruchs 1 gelöst.

Die erfindungsgemäße Lösung erlaubt es, sehr schnell Adaptionen an einem bestehenden Design einer fernoptischen Vorrichtung vorzunehmen sowie komplexe Fertigungsschritte sehr einfach zu automatisieren. Darüber hinaus wird für einen Benutzer die Möglichkeit geschaffen, die fernoptische Vorrichtung zu individualisieren und seinen Bedürfnissen anzupassen.

An dieser Stelle sei darauf hingewiesen, dass in diesem Dokument unter dem Begriff "3D-Druck" ganz allgemein ein additives Fertigungsverfahren zum schichtweisen Aufbau eines Werkstückes verstanden wird.

Unter einer fernoptischen Vorrichtung wird in diesem Dokument eine optische Vorrichtung zur Beobachtung eines Gegenstandes, der mindestens zwei Meter von einem Beobachter entfernt ist, verstanden.

Eine einfache Möglichkeit ein exaktes Modell zu erstellen, besteht darin, dass das Modell des zumindest einen Grundelements der fernoptischen Vorrichtung und/oder des zumindest einen Zubehörteils und/oder des zumindest einen Bedienteils und/oder zumindest eines Gehäuseteils oder des zumindest einen anderen zu druckenden Teils der fernoptischen Vorrichtung durch Ermitteln einer Oberflächengeometrie zumindest eines als Referenz dienenden Teils der fernoptischen Vorrichtung oder eines als Referenz dienenden Zubehörteils erstellt wird.

Hierbei kann die Oberflächengeometrie durch Abtasten, insbesondere kontaktloses Abtasten, und/oder mittels eines Triangulationsverfahrens und/oder mittels einer Abformvorrichtung ermittelt werden. So kann die Oberflächengeometrie durch Abtasten des zumindest einen Grundelements der fernoptischen Vorrichtung und/oder des zumindest einen Zubehörteils und/oder des zumindest einen Bedienteils oder des zumindest einen anderen zu druckenden Teils der fernoptischen Vorrichtung beispielsweise mittels eines Lichtschnittverfahrens ermittelt werden. Hierbei kann das zumindest eine Grundelement der fernoptischen Vorrichtung und/oder der zumindest einen Zubehörteil und/oder der zumindest eine Bedienteil oder der zumindest eine andere zu druckende Teil der fernoptischen Vorrichtung mit einer oder mehreren Lichtlinien, oder einem Licht-Liniengitter beleuchtet, und die Umrissform erfasst werden. Wird dies entlang des Umfangs wiederholt durchgeführt, kann aus dem Verlauf der erhaltenen Umrisse mittels mathematischer Methoden die Oberflächengeometrie ermittelt werden.

Als besonders vorteilhaft hat es sich herausgestellt, wenn das Modell der Grundform des zumindest einen Elements der fernoptischen Vorrichtung und/oder des zumindest einen Zubehörteils und/oder des zumindest einen Bedienteils und/oder des zumindest einen anderen zu druckenden Teils der fernoptischen Vorrichtung als CAD-Modell erstellt und gespeichert wird. Die Speicherung als CAD-Modell ermöglicht eine einfache Weiterbearbeitung, Veränderung und Anpassung des Modells. Zudem ist auch möglich, das CAD-Modell über das Internet an einen örtlich entfernten 3D-Drucker oder eine entsprechende Fabrikationsstätte zu übermitteln und sich das fertige Produkt liefern zu lassen. Es ist denkbar, dass die Daten direkt an einen Endnutzer (Kunden) übermittelt werden, welcher das Produkt, Bauteil, Zubehörteil somit auch selbst und einfach zu Hause ausdrucken kann.

Um eine einfache Auswahl der Designparameter zu ermöglichen, kann in Schritt i) der zumindest eine Wert über ein graphisches User-Interface ausgewählt wird. So kann ein Benutzer beispielsweise über eine Design-App die entsprechenden Werte eingeben und sich die Vorschau auf einem entsprechenden elektronischen Gerät, beispielsweise, Smartphone, Tablett, Laptop, PC etc. darstellen lassen.

Als besonders vorteilhaft hat sich herausgestellt, wenn das Gehäuse der fernoptischen Vorrichtung zumindest abschnittsweise mittels des 3D-Druckverfahrens hergestellt wird. Dies ermöglicht beispielsweise eine einfache Anpassung von Gehäuseabschnitten an unterschiedliche Tragesysteme. So können z.B. Abschnitte des Gehäuses mit entsprechenden Aufnahmen für entsprechende Tragegurte für die fernoptische Vorrichtung gedruckt werden.

Eine vorteilhafte Weiterbildung der Erfindung besteht darin, dass eine Armierung, insbesondere ein Überzug, für das Gehäuse der fernoptischen Vorrichtung mittels des 3D-Druckverfahrens hergestellt wird. Damit lässt sich bspw. eine individuell auf den Anwender angepasste Außenhülle für das fernoptische Gerät herstellen. Zusätzlich zur optimal angepassten Armierung, können gemäß dieser Ausführung individuelle Wünsche des Anwenders realisiert werden, bspw. eine generell andere Form/Farbe bzw. zusätzliche haptische Merkmale. Als eine Armierung kann allgemein jeder Überzug eines Gehäuseteiles der fernoptischen Vorrichtung verstanden werden, welcher die Vorrichtung gegen Umwelteinflüsse wie Sonnenstrahlung, Wärme, Kälte, Schweiß, Luftfeuchtigkeit aber auch gegen mechanische Einflüsse wie Stöße, Kratzer oder Abrieb schützt.

Eine Montage wird dadurch erleichtert, dass die Armierung in zumindest zwei Teilstücken hergestellt wird, und über dem Gehäuse lösbar oder unlösbar zu einem Teil zusammengefügt wird.

Darüber hinaus kann die Armierung als Überziehteil hergestellt wird und zumindest abschnittsweise über das Gehäuse gezogen wird. Diese Variante der Erfindung zeichnet sich dadurch aus, dass eine einfache Befestigung der Armierung auf dem Gehäuse ermöglicht wird.

Besonders bevorzugt wird die Armierung mit dem Gehäuse kraftschlüssig und/oder formschlüssig verbunden.

Gemäß einer weiteren Variante der Erfindung kann zumindest ein Anbauteil für das Gehäuse der fernoptischen Vorrichtung gedruckt und mit dem Gehäuse verbunden werden.

Um eine gute Verbindbarkeit des Anbauteils mit dem Gehäuse zu gewährleisten kann es vorgesehen sein, dass an dem Gehäuse zumindest ein zur Verbindung mit dem Anbauteil ausgebildetes erstes Schnittstellenelement angeordnet ist, wobei entsprechend der Form des zumindest einen ersten Schnittstellenelementes an dem Anbauteil zumindest ein, mit dem zumindest einen ersten Schnittstellenelement verbindbares zweites Schnittstellenelement gedruckt wird. Bei den Schnittstellenelementen kann es sich beispielsweise um eine miteinander korrespondierende Schraube und ein Gewinde, Teile eines Bajonettverschlusses, etc. handeln.

Besonders bevorzugt wird als Anbauteil der zumindest eine Bedienteil gedruckt, wobei der Bedienteil zur Veränderung einer optischen Einstellung der fernoptischen Vorrichtung, insbesondere zur Veränderung einer Dioptrieneinstellung, eines Fokus oder einer Vergrößerung der fernoptischen Vorrichtung ausgebildet ist. Dies ermöglicht eine individuelle Anpassung von des Bedienteils nach den Vorstellungen eines Benutzers, so kann sich beispielsweise ein Bedienteil zur Einstellung eines Fokus, farblich von einem Bedienteil für eine Vergrößerung unterscheiden, wodurch sich auch die Wahrscheinlichkeit einer Verwechslung der unterschiedlichen Betätigungsmittel verringern lässt. Gemäß einer Weiterbildung der Erfindung kann als Anbauteil der zumindest eine Bedienteil in Form eines Druckknopfs und/oder eines Drehknopfs und/oder eines Schalters und/oder eines Ballistikturms und/oder Bestandteil eines Ballistikturms gedruckt werden.

Bei einer weiteren günstigen Variante der Erfindung kann zumindest ein anatomisch geformter Kontaktteil der fernoptischen Vorrichtung für einen Benutzer hergestellt werden, wobei zur Herstellung des Kontaktteils eine anatomische Ist-Form eines mit der fernoptischen Vorrichtung in Kontakt tretenden Körperteils des Benutzers ermittelt und ein bei Benutzung der fernoptischen Vorrichtung an dem Körperteil anliegender Kontaktabschnitt des Kontaktteils entsprechend der anatomischen Ist-Form gedruckt wird. Durch diese Variante der Erfindung können der Benutzungskomfort und die Handhabbarkeit der fernoptischen Vorrichtung wesentlich erhöht werden. Ein weiterer Vorteil dieser Ausführungsform liegt darin, dass für fernoptische Geräte die Möglichkeit besteht, ein auf den Anwender individuell und optimal angepasstes Kontaktstück zu schaffen, und somit ein individualisiertes fernoptisches Gerät bilden zu können. Kompromisse hinsichtlich einer Anpassung an die tatsächlichen, körperlichen Gegebenheiten entfallen, ebenso entfällt eine Anforderung, mehrere unterschiedliche (Gehäuse) Varianten des fernoptischen Geräts fertigen zu müssen, um trotzdem nur einen Großteil der realen Gegebenheiten beim Anwender abdecken zu können. Mit diesen beiden Ausführungsvarianten wird eine deutliche Steigerung der Anwenderzufriedenheit erreicht. Ferner steigt auch die Anwendungsleistungsfähigkeit des fernoptischen Geräts, da das Gerät an den jeweiligen Anwender angepasst ist und Bedienfehler aufgrund von Haltungsfehlern reduziert bzw. ausgeschlossen sind.

Gemäß einer Ausführungsform kann eine Oberflächengeometrie des Körperteils ermittelt werden, um die anatomische Ist-Form festzustellen. Die Oberflächengeometrie des Körperteils kann beispielsweise durch Abtasten, insbesondere kontaktloses Abtasten, und/oder mittels eines Triangulationsverfahrens und/oder mittels einer Abformvorrichtung ermittelt werden.

Die Abformvorrichtung zum Abformen des Körperteils und/oder des zumindest einen Grundelements der fernoptischen Vorrichtung und/oder des zumindest einen Zubehörteils und/oder des zumindest einen Bedienteils und/oder des zumindest einen anderen zu druckenden Teils der fernoptischen Vorrichtung kann einen nicht reversibel verformbarer Abdruckkörper, insbesondere ein Formschaum, Gelkissen oder ein Gipskissen, umfassen, wobei der Abdruckkörper in eine Negativform der Ist-Form umgeformt wird. Diese Variante ist bspw. für die Herstellung eines individualisierten Bedienelements, einer Augenmuschel oder eines Haltelements, beispielsweise eines Griffstücks von Vorteil. Der Abdruck bleibt auch nach Wegnahme des korrespondierenden Elements oder Teils erhalten. Insbesondere können Grate und/oder bekannte Problemstellen bereits vor der weiteren Verarbeitung entfernt werden. Bei der Herstellung eines Kontaktstücks, beispielsweise eines Griffstückes, kann die Anlege- bzw. Haltekraft, die zum Verformen des Abdruckkörpers erforderlich ist, vorteilhafterweise vom Betrag in etwa der tatsächlichen im Anwendungsfall des fernoptischen Geräts auf das Kontaktstück wirkenden Kraft entsprechen. Dies ist von Vorteil, um einen optimal an die anatomische Ist-Form des Anwenders angepassten Abdruckkörper abformen zu können. Nach diesem Abformvorgang muss der Abdruckkörper jedoch ausreichend stabil und fest sein, um für die weiteren Bearbeitungsschritte geeignet zu sein. Mit dieser Weiterbildung wird es nun möglich, vereinfacht gesprochen, einen weichen Abdruckkörper für den Abdruckvorgang zur Verfügung zu haben, der anschließend, nach Zeitablauf und/oder durch ein extern auszulösendes Ereignis, soweit erhärtet, dass die abgeformte Kontur bestehen bleibt. Ein Formschaum ist strukturell derart aufgebaut, dass eine eingedrückte Kontur bestehen bleibt, eine elastische Rückstellung ist nicht möglich. Elastische Abdruckkörper können in ihrer Materialzusammensetzung so gebildet sein, dass die Elastizität nach einer festlegbaren Zeit verschwindet, und das Material erhärtet. Dieser Aushärtungsvorgang kann bspw. auch durch einen (UV)-Blitz oder eine mechanische Druckwelle initiiert werden. Unter den Begriffen Gel- und Gipskissen werden Elemente verstanden, die in einer Hülle einen Werkstoff enthalten, der für eine bestimmte Zeit pastös ist, und dann selbsttätig oder durch ein Initialereignis aushärtet.

Ferner kann die Oberflächengeometrie des zumindest einen Körperteils und/oder des zumindest einen Grundelements der fernoptischen Einrichtung und/oder des Zubehörteils und/oder des zumindest einen Bedienteils und/oder zumindest eines Gehäuseteils und/oder des zumindest einen anderen zu druckenden Teils der fernoptischen Vorrichtung durch Abtasten des Abdruckkörpers erfolgen.

Gemäß einer bevorzugten Variante der Erfindung kann die Oberflächengeometrie durch Abtasten des Abdruckkörpers kontaktlos, insbesondere mittels eines Lichtschnittverfahrens, ermittelt werden. Weiterbildungen bestehen auch darin, dass die Oberflächengeometrie durch Abtasten des Abdruckkörpers kontaktlos mittels eines Triangulationsverfahrens ermittelt wird, und dass die Oberflächengeometrie durch Abtasten des Abdruckkörpers mittels eines Koordinatentastsystems ermittelt wird.

Darüber hinaus kann die Abformvorrichtung einen kraftsensitiven Abdruckkörper umfassen, insbesondere einen Abdruckkörper mit einem Kraftsensor, der eine auf den Kraftsensor einwirkende Kraft, in eine elektrische Kenngröße umwandelt, insbesondere ein piezoelektrischer und/oder resistiver und/oder kapazitiver Kraftsensor. Die Form des zumindest einen Körperteils und/oder des zumindest einen Grundelements der fernoptischen Einrichtung und/oder des Zubehörteils und/oder des zumindest einen Bedienteils und/oder zumindest eines Gehäuseteils und/oder des zumindest einen anderen zu druckenden Teils der fernoptischen Vorrichtung kann durch ein Ermitteln von diskreten Kraftwerten gebildet werden, wobei ein Koordinatennetz durch eine Kraft-Koordinatentransformation aus den ermittelten Kraftwerten gebildet werden kann. Wenn das fernoptische Gerät bspw. ein beträchtliches Gewicht aufweist und/oder sehr fest gehalten werden muss, hat ein deformierbarer Abdruckkörper unter Umständen den Nachteil, dass Abschnitte der Oberfläche eines zu erfassenden Teils zu tief in den Abdruckkörper eingedrückt wird und aufgrund der nicht gegebenen Elastizität, eine nicht optimal angepasste Form ermittelt wird. Mit der gegenständlichen Ausführungsvariante wird die Form indirekt über die durch das Halten bzw. Aufnehmen einwirkende Kraft ermittelt. Da der Abdruckkörper nicht deformierbar ist, kann dieser auch kräftig gehalten bzw. gefasst werden - und dies bei einer sehr feinen Auflösung und großen erfassbaren Dynamik.

Eine Weiterbildung besteht auch darin, dass der kraftsensitive Abdruckkörper eine Anordnung von Tastelementen aufweist. Solche Tastelemente können bspw. federvorgespannte Taststifte sein, die in einer Ruhelage aus dem Abdruckkörper hervorragen, und sich beim Halten bzw. Aufnehmen des fernoptischen Geräts an die Ist-Form anpassen. Durch Ermitteln des Eindrückwegs lässt sich direkt die Ist-Form ermitteln.

Eine weitere mögliche Ausführungsform besteht darin, dass der kraftsensitive Abdruckkörper einen transparenten, elastisch deformierbaren Volumenkörper umfasst, wobei von einer im Abdruckkörperinneren angeordneten optischen Abtastvorrichtung, Triangulationspunkte der inneren Oberflächengeometrie des Abdruckkörpers erfasst werden. Neben einer Bestimmung der Oberflächengeometrie durch Abtastung der äußeren Oberfläche, kann dies auch aus dem Inneren des Abdruckkörpers erfolgen, da dieser transparent ausgebildet ist. Der Vorteil liegt darin, dass ein mehrfach einsetzbarer, dauerelastischer Abdruckkörper verwendet werden kann. Der Volumenkörper kann beispielsweise durch einen gas- oder flüssigkeitsgefüllten transparenten Ballon, oder ein transparentes Gelkissen gebildet werden.

Nach einer weiteren möglichen Ausführung ist vorgesehen, dass der kraftsensitive Abdrucckörper einen transparenten, nicht deformierbaren Volumenkörper umfasst, wobei von einer im Abdruckkörperinneren angeordneten optischen Bilderfassungsvorrichtung, das Abdruckbild des Teils oder Elements, dessen Form bestimmt werden soll, an der Außenfläche des Abdruckkörpers erfasst wird. Bevorzugt wird neben der Bilderfassungsvorrichtung auch eine Beleuchtungsvorrichtung angeordnet sein, und Licht in Richtung der Außenfläche des Abdrucckörpers abgeben. Durch das Abformen des Elementes oder Teils, wird es Bereiche geben, in denen es aufgrund einer Abweichung der Ist-Form des Elementes oder Teils von der generischen Form des Abdruckkörpers, zu einer erhöhten Deformation des Abdruckkörpers kommt. Diese Deformation lässt sich aufgrund ihrer charakteristischen Helligkeitsverteilung optisch gut erfassen und über die Helligkeitsverteilung, insbesondere durch Anwendung optischer Filtermethoden, auf die Kraftverhältnisse an der Außenfläche des Abdruckkörpers schließen.

Eine Variante kann auch darin bestehen, dass die Abformvorrichtung durch einen Tiefensensor oder durch einen Volumenscanner gebildet ist und das Modell durch Ermitteln von diskreten Abstandswerten zwischen der Abformvorrichtung und dem korrespondierenden Teil oder Element gebildet wird, und ein Koordinatennetz durch eine Vektortransformation aus den ermittelten Abstandswerten gebildet wird. Ein Tiefensensor kann beispielsweise durch eine Stereokamera oder TOF (time-of-flight) Kamera gebildet sein, und ermittelt ein Abbild des erfassten Bereichs, wobei jedem Pixel des erfassten Abbilds eine Abstandsinformation zugeordnet ist.

Eine vorteilhafte Weiterbildung der Erfindung besteht darin, dass das 3D Druckverfahren ein Freiraumverfahren oder ein Pulverbettverfahren umfasst. Ein Freiraumverfahren ist bspw. ein 3D-Druckverfahren, bei dem ein aufschmelzbares Material von einem Koordinatenkopf schichtweise aufgetragen wird. Nach dem Aushärten ist ein solides Stück entstanden. Bei einem Pulverbettverfahren wird ein aufschmelzbares Pulver in dünnen Schichten aufgetragen, und von einer punktförmigen Energiequelle, zumeist einem Laser, in definierten Strukturen aufgeschmolzen, wodurch es sich mit einer zuvor aufgebrachten Struktur verbindet. Der Vorteil dieses Verfahrens liegt darin, dass auch Materialien mit hoher Schmelztemperatur verwendet werden können, insbesondere Metalle. Ein Pulverbettverfahren hat den weiteren Vorteil, dass auch komplexe Hinterschneidungen erzeugt werden können, wie sie bspw. für ein Hand-Griffstück erforderlich sind, um eine möglichst gute Anpassung an die anatomischen Gegebenheiten, bspw. der Finger, zu gewährleisten.

Nach einer weiteren Ausführung ist vorgesehen, dass das 3D-Druckverfahren ein Freiraumverfahren mit einem volumenveränderlichen Material ist. Ein volumenveränderliches Material ist bevorzugt dazu ausgebildet, nach der Herstellung seine Form bzw. sein Volumen auf definierte Art zu verändern. Beispielsweise kann vorgesehen sein, dass die Volumenänderung unter Temperatureinwirkung ausgelöst wird und nach Wegfall der Temperatureinwirkung, wieder verschwindet. Gegebenenfalls kann dies auch mit einer Änderung der Materialeigenschaften einhergehen, bspw. in dem das Material bei der Volumenänderung etwas elastisch wird. Da die individuellen anatomischen Gegebenheiten auch tagesabhängig sind, als Beispiel seien hier leicht geschwollene Finger genannt, lässt sich mit dieser Weiterbildung ein optimal an den Anwender angepasstes Kontaktstück herstellen, welches sich durch das volumenveränderliche Material, bei der Anwendung des fernoptischen Geräts, genau an die jeweils tagesaktuellen, anatomischen Gegebenheiten anpasst.

Eine weitere vorteilhaften Variante der Erfindung besteht darin, dass das zumindest eine 3D-Druckverfahren ein Laserschmelzverfahren und/oder ein Elektronenschmelzverfahren und/oder ein Stereolithographieverfahren und/oder ein Digital Light Processing Verfahren und/oder Polyjet-Modelling-verfahren und/oder Fused Deposition Modelling Verfahren und/oder ein Multi-Jet-Modelling Verfahren und/oder ein Binder Jetting Verfahren und/oder ein Laserauftragschweißverfahren und/oder ein Kaltgasspritzverfahren umfasst. Durch Kombination unterschiedlicher 3D-Druckverfahren können alle Bestandteile inklusive der optischen Bestandteile, wie Linsen, durch 3D-Druck hergestellt werden. So lassen sich beispielsweise bei Verwendung eines Multi Jet Modelling Verfahrens aus Glaspulver Linsen drucken.

Vorteilhafterweise kann die gesamte fernoptische Vorrichtung durch das zumindest eine 3D-Druckverfahren hergestellt sein.

Bei einer vorteilhaften Ausgestaltung der Erfindung kann der zumindest eine durch das 3D-Druckverfahren hergestellte Teil zumindest ein, bei bestimmungsgemäßer Benutzung der fernoptischen Vorrichtung mit einem Körperabschnitt eines Benutzers in Berührung kommendes Kontaktelement sein.

Bevorzugt ist das zumindest eine Kontaktelement eine Augenmuschel, ein Griffabschnitt oder eine Abstützung für einen Stirnbereich eines Benutzers.

Gemäß einer weiteren vorteilhaften Ausgestaltung kann der zumindest eine durch das 3D-Druckverfahren hergestellte Teil eine Armierung, insbesondere ein Überzug, für das Gehäuse der fernoptischen Vorrichtung sein.

Bei einer weiteren Variante der Erfindung kann es vorgesehen sein, dass das Gehäuse zumindest teilweise mittels des 3D-Druckverfahrens hergestellt ist.

Zum besseren Verständnis der Erfindung wird diese anhand der nachfolgenden Figuren näher erläutert.

Es zeigen jeweils in stark vereinfachter, schematischer Darstellung:
- Fig. 1: eine erste Variante einer erfindungsgemäßen fernoptischen Vorrichtung;
- Fig. 2: eine erfindungsgemäße Druckvorrichtung;
- Fig. 3: ein Detail der fernoptischen Vorrichtung aus Fig. 1;
- Fig. 4: eine zweite Variante einer erfindungsgemäßen fernoptischen Vorrichtung,
- Fig. 5: ein Detail eines Gehäuses einer fernoptischen Vorrichtung mit einem Anbauteil;
- Fig. 6: ein Detail des Gehäuses aus Fig. 5 mit abgenommenem Anbauteil;
- Fig. 7: ein Detail eines Gehäuses einer fernoptischen Vorrichtung mit einem Objektivdeckel;
- Fig. 8: ein Detail eines Verbindungsstückes zum Befestigen des Objektivdeckels an dem Gehäuse aus Fig. 7;
- Fig. 9: ein Detail einer Schnittstelle des Gehäuses aus Fig. 7 zur Verbindung des Verbindungsstückes des Objektivdeckels an dem Gehäuse;
- Fig. 10: eine dritte Variante einer erfindungsgemäßen fernoptischen Vorrichtung,
- Fig. 11: ein Bedienelement der fernoptischen Vorrichtung aus Fig. 10 im näheren Detail.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

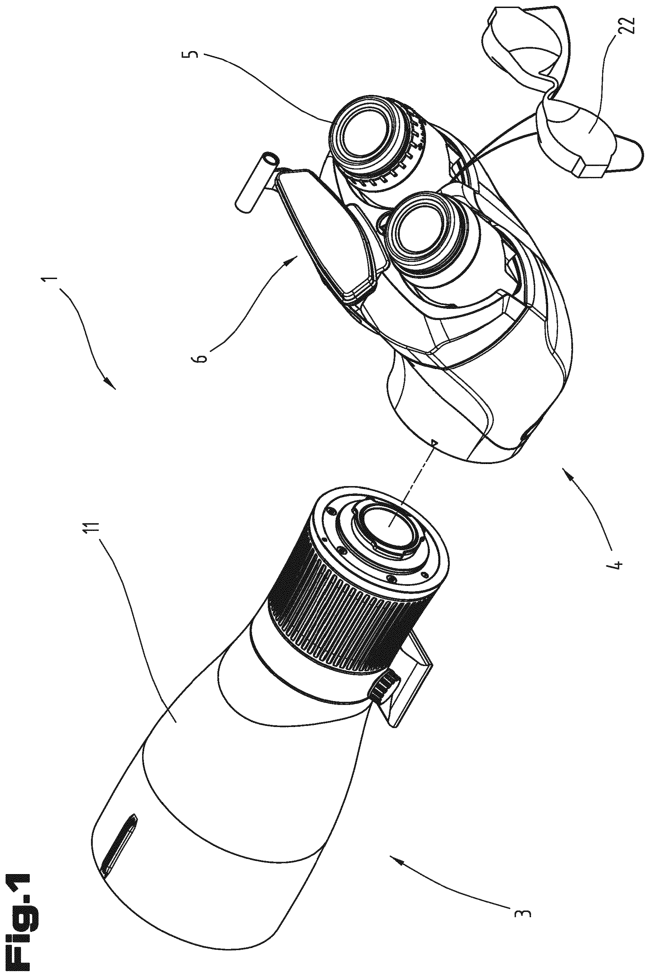

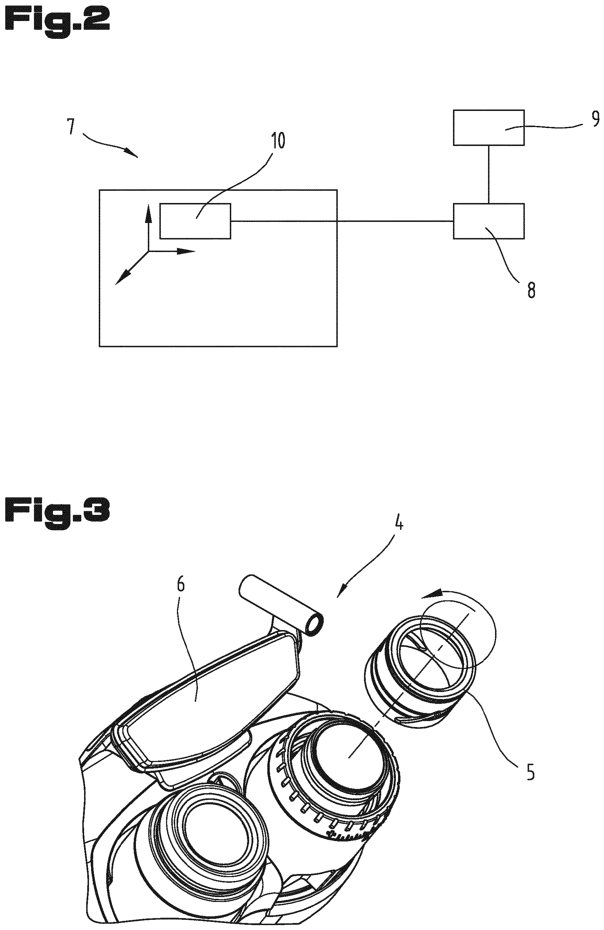

Fig. 1 zeigt eine nach dem erfindungsgemäßen Verfahren hergestellte fernoptische Vorrichtung 1. Erfindungsgemäß wird hierbei die fernoptische Vorrichtung 1 und/oder mindestens ein Zubehörteil, und/oder mindestens ein Bedienteil 2 und/oder ein Gehäuseteil 3, 4 teilweise oder ganz mit einem 3D-Druckverfahren hergestellt. Mit dem erfindungsgemäßen Verfahren lässt sich jedoch auch ein anatomisch an einen Benutzer angepasstes Kontaktteil herstellen. Bei dem Kontaktteil kann es sich beispielsweise um einen Halteteil, insbesondere einen Griff oder eine Griffschale, der fernoptischen Vorrichtung 1 oder wie in Fig. 1 und 3 dargestellt um eine Augenmuschel 5 und einen Abstützteil 6 handeln, an welchem eine Stirn eines Benutzers anliegt. Zur Herstellung des Kontaktteils kann eine anatomische Ist-Form eines mit der fernoptischen Vorrichtung 1 in Kontakt tretenden Körperteils des Benutzers ermittelt werden. Ein bei Benutzung der fernoptischen Vorrichtung 1 an dem Körperteil anliegender Kontaktabschnitt des Kontaktteils kann dann entsprechend der anatomischen Ist-Form gedruckt werden. Bei dem Kontaktelement kann es sich beispielsweise auch um eine anatomisch geformte Halterung zur Befestigung an einem Kopf eines Benutzers handeln.

Bei dem Zubehörteil kann es sich beispielsweise um eine Tasche, eine Schutzhülle einen Tragegurt, eine Objektivabdeckung oder wie in den Figuren 1 und 3 dargestellt um eine Okularabdeckung 22 handeln.

Bei der in Fig. 1 dargestellten beispielhaften Variante ist die erfindungsgemäße Vorrichtung 1 als Teleskop ausgebildet.

Bei dem 3D-Druckverfahren kann es sich beispielsweise um ein Freiraumverfahren, insbesondere um ein Freiraumverfahren einem volumenveränderlichen Material, ein Pulverbettverfahren, ein Laserschmelzverfahren, ein Elektronenschmelzverfahren, ein Stereolithographieverfahren, ein Digital Light Processing Verfahren, ein Polyjet Modelling Verfahren, Fused Deposition Modelling Verfahren, ein Multi Jet Modelling Verfahren, ein Binder Jetting Verfahren, ein Laserauftragschweißverfahren oder ein Kaltgasspritzverfahren oder eine Kombination zweier oder mehrere der oben genannten Verfahren handeln. So kann beispielsweise ein Metallteil des Fernrohres mittels eines Laserautragsschweißverfahrens hergestellt sein, während sich optische Bauteile, wie Linsen, beispielsweise aus Quarz- oder Glaspulverpulver mittels Multi Jet Modelling herstellen lassen.

Im Rahmen der Herstellung kann ein mindestens Modell eines Grundelements der femoptischen Vorrichtung 1, beispielsweise eines Gehäuses oder Gehäuseteils und/oder des Zubehörteils und/oder des Bedienteils 2, des Kontaktteils und/oder zumindest eines anderen zu druckenden Teils der fernoptischen Vorrichtung 1 in elektronischer Form gespeichert werden.

Das Modell kann beispielsweise als CAD-Modell erstellt und gespeichert werden. Gespeicherte CAD-Modelle können zur Druckersteuerung in die Oberflächenbeschreibungssprache STL (Surface Tesselation Language) konvertiert werden.

Zur Herstellung eines Teils der fernoptischen Vorrichtung 1 beispielsweise eines oder aller Gehäuseteile 3, 4 oder des Bedienteils 2 kann eine 3D-Druckvorrichtung verwendet werden, wie sie symbolisch in Fig. 2 dargestellt ist. Um die Qualität der hergestellten Teile zu steigern, kann das 3D-Druckverfahren auch in einem abgeschlossenen Bereich unter anderen atmosphärischen Bedingungen, wie Druck, Temperatur, Luftfeuchtigkeit, Gaszusammensetzung, als jenen einer Umgebungsatmosphäre durchgeführt werden. Beispielsweise kann das Drucken auch in einer Reinraumatmosphäre oder in einem Vakuum erfolgen.

Die 3D-Druckvorrichtung 7 weist mindestens eine Druckersteuerung 8, beispielsweise einen entsprechend programmierten Signal- oder Mikroprozessor, sowie zumindest einem elektronischen Speicher 9 auf. Die Druckersteuerung 8 ist dazu eingerichtet, anhand von in dem elektronischen Speicher 9 gespeicherten Daten, einen Druckkopf 10 zur Herstellung des Gegenstandes zu steuern. In dem elektronischen Speicher 9 ist das oben genannte 3D-Modell des Grundelements der fernoptischen Vorrichtung 1, des Zubehörteils, des Bedienteils 2, des Kontaktteils oder des anderen zu druckenden Teils der fernoptischen Vorrichtung 1 in elektronischer Form gespeichert. Eine Steuerung der 3D-Druckvorrichtung erfolgt somit anhand des in elektronischer Form gespeicherten 3D-Modells, um einen diesem Modell entsprechenden Gegenstand zu drucken. Auch wenn es prinzipiell möglich ist, alle Teile der fernoptischen Vorrichtung 1 mittels 3D-Druck herzustellen, so ist es jedoch auch möglich, dass einzelne Teile beispielsweise ein Grundelement der fernoptischen Vorrichtung, beispielsweise ein Teil eines Gehäuses, herkömmlich gefertigt und bedruckt werden. Auch ist es selbstverständlich möglich, Einzelteile getrennt zu drucken und in einem eigenen Schritt zusammenzubauen. Es besteht jedoch auch die Möglichkeit, eine größere aus mehreren Einzelteilen bestehende Baugruppe zu drucken.

Das Modell des zu druckenden Gegenstands kann durch Ermitteln einer Oberflächengeometrie, der fernoptischen Vorrichtung 1 oder eines als Referenz dienenden Teils der fernoptischen Vorrichtung 1 oder eines als Referenz dienenden Zubehörteils erstellt werden. Die Oberflächengeometrie kann beispielsweise durch Abtasten, beispielsweise kontaktloses Abtasten mit einem Lichtstrahl, mittels eines Triangulationsverfahrens, mittels einer Abformvorrichtung oder einer Kombination der genannten Methoden ermittelt werden. Eine Beschreibung der mittels Triangulation oder Scan gewonnen Oberflächengeometrie und Beschaffenheit kann beispielsweise in STL erfolgen.

Wenn ein Erfassen der Oberfläche des zu druckenden Gegenstandes mittels Abformung erfolgt, kann die Abformvorrichtung zum Abformen des Körperteils, der fernoptischen Vorrichtung, eines Teils derselben, des Zubehörteils, des Bedienteils oder Teilen einen nicht reversibel verformbaren Abdruckkörper umfassen. Der Abdruckkörper kann beispielsweise ein Formschaum, Gelkissen oder ein Gipskissen sein, wobei der Abdruckkörper in eine Negativform der Ist-Form umgeformt wird. Die entsprechende Oberflächengeometrie des Gegenstandes kann beispielsweise durch Abtasten des Abdruckkörpers und/oder Triangulation ermittelt werden.

Die Abformvorrichtung kann aber auch einen kraftsensitiven Abdruckkörper aufwiesen, insbesondere einen Abdruckkörper mit einem Kraftsensor, der eine auf den Kraftsensor einwirkende Kraft, in eine elektrische Kenngröße umwandelt, insbesondere ein piezoelektrischer und/oder resistiver und/oder kapazitiver Kraftsensor. Alternativ oder zusätzlich kann der Abdruckkörper eine Anordnung von Tastelementen aufweisen.

Gemäß einer weiteren Ausführungsform kann der Abdruckkörper auch einen transparenten, elastisch deformierbaren Volumenkörper aufweisen, wobei von einer im Abdruckkörperinneren angeordneten optischen Abtastvorrichtung, Triangulationspunkte der inneren Oberflächengeometrie des Abdruckkörpers erfasst werden können. Weiters kann der kraftsensitive Abdruckkörper einen transparenten, nicht deformierbaren Volumenkörper umfassen, wobei von einer im Abdruckkörperinneren angeordneten optischen Bilderfassungsvorrichtung ein Abdruckbild an der Außenfläche des Abdruckkörpers erfasst wird.

Um einem Benutzer eine Individualisierung der fernoptischen Vorrichtung nach seinen Vorstellungen zu erleichtern, kann der Benutzer über ein User Interface auf das elektronische Model zugreifen und die Daten oder Kopien dieser Daten bearbeiten. Das User Interface kann in eine App implementiert sein, welche auf einem mobilen Endgerät, beispielsweise Mobiltelefon, Tablet, PDA, etc., installiert ist. Alternativ kann das User Interface auch Teil eines Programmes sein, welches auf einem Standcomputer oder Laptop, installiert ist.

Nach Aufruf des User Interfaces kann von dem Benutzer in einem Schritt i) eine Oberflächenbeschaffenheit oder die Geometrie des zu druckenden Teils ausgewählt werden, beispielsweise die Farbe oder eine Rauheit. Das Auswählen der geometrischen Eigenschaften des zu druckenden Teils kann beispielsweise programmunterstützt anhand von hinterlegten Standard Modellen unterschiedlicher fernoptischer Vorrichtungen erfolgen. So kann der Benutzer beispielsweise eine Typennummer einer fernoptischen Vorrichtung sowie die Information eingeben, dass er beispielsweise eine Augenmuschel drucken möchte. Anhand dieser Informationen können dann eine oder mehrere Arten von Augenmuscheln mit passender Geometrie vorgeschlagen werden, aus welchen der Nutzer wählen kann. Zudem kann es vorgesehen sein, dass der Benutzer noch weitere Änderungen an den vorgeschlagenen Designs vornehmen kann. Darüber hinaus besteht auch die Möglichkeit, dass ein Benutzer vollkommen frei Bauteile entwirft die dann durch ein entsprechendes Programm auf die für einen bestimmten Typ von fernoptischer Vorrichtung richtige Größe skaliert werden.

In einem Schritt ii) wird der zu druckende Gegenstand mit dem 3D-Druckverfahren gedruckt.

Um dem Benutzer noch vor dem Drucken einen Eindruck geben zu können, wie das gewählte Design des zu druckenden Gegenstandes aussieht, kann anhand der ausgewählten Parameter eine Vorschau des Erscheinungsbildes auf einem Bildschirm eines Endgerätes des Benutzers ausgegeben werden.

Wie sich der zu druckende Gegenstand, beispielsweise eine Armierung, in ein Gesamtbild der fernoptischen Vorrichtung einfügt, lässt sich für einen Benutzer vorab erkennen, wenn anhand der i) ausgewählten Parameter und ii) eines Modells des Grundelements der fernoptischen Vorrichtung eine Vorschau auf die Kombination aus dem Grundelement und dem zu druckenden Teil ausgegeben wird.

Wie aus Fig. 1 weiter ersichtlich ist, kann eine Armierung 11, insbesondere ein Überzug, für den Gehäuse 3 mittels des 3D-Druckverfahrens hergestellt werden. Die Armierung 11 kann aus zwei oder mehr Teilstücken hergestellt und über dem Gehäuse 3 lösbar oder unlösbar zu einem Teil zusammengefügt werden. Alternativ kann die Armierung 11 als Überziehteil hergestellt und zumindest abschnittsweise über das Gehäuse 3 gezogen werden. Die Armierung 11 kann mit dem Gehäuse 3 kraftschlüssig und/oder formschlüssig verbunden sein. Zudem kann die Armierung 11 auch direkt auf das Gehäuse 3 gedruckt werden. Weiters kann die Armierung 11 auch an anatomische Gegebenheiten eines Benutzers angepasst werden. So kann beispielsweise die Dicke der Armierung an eine Handgröße eines Benutzers angepasst werden. Auch lässt sich die Armierung zur Realisierung anderer gewünschter Funktionen, wie beispielswiese eines Stoßschutzes, anpassen.

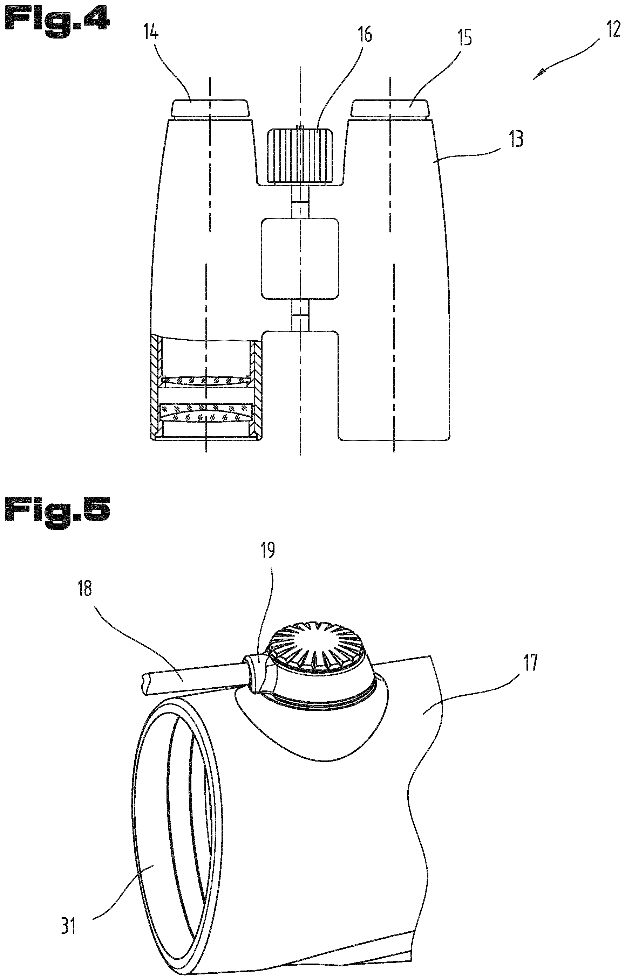

Gemäß Fig. 4 kann es sich bei einer anderen Variante der fernoptischen Vorrichtung 12 um ein binokulares Fernglas handeln. Auch hier gilt das oben zu Fig. 1 und 3 Gesagte, dass sämtliche Teile der fernoptischen Vorrichtung mittels eines 3D-Druckverfahrens hergestellt sein können. Insbesondere ist es von Vorteil, wenn das Gehäuse 13 oder an einen Benutzer anatomisch angepasste Kontaktteile, wie die Augenmuscheln 14, 15 oder Halteabschnitte des Gehäuses 13, oder ein Bedienelement 16 in Form eines Drehringes oder Drehknopfes zur Veränderung einer optischen Einstellung mit dem erfindungsgemäßen Verfahren hergestellt sind.

Aus Fig. 5 ist ein Abschnitt eines Gehäuses 17 einer fernoptischen Vorrichtung zu sehen, bei welcher ein Zubehörteil in Form eines Tragegurtes 18 an dem Gehäuse 17 befestigt ist. Zur Befestigung des Tragegurtes 18 dient ein Anbauteil 19 in Form eines Drehknopfes. Der Tragegurt 18 als auch der Anbauteil 19 können ebenfalls mit dem erfindungsgemäßen Verfahren hergestellt sein.

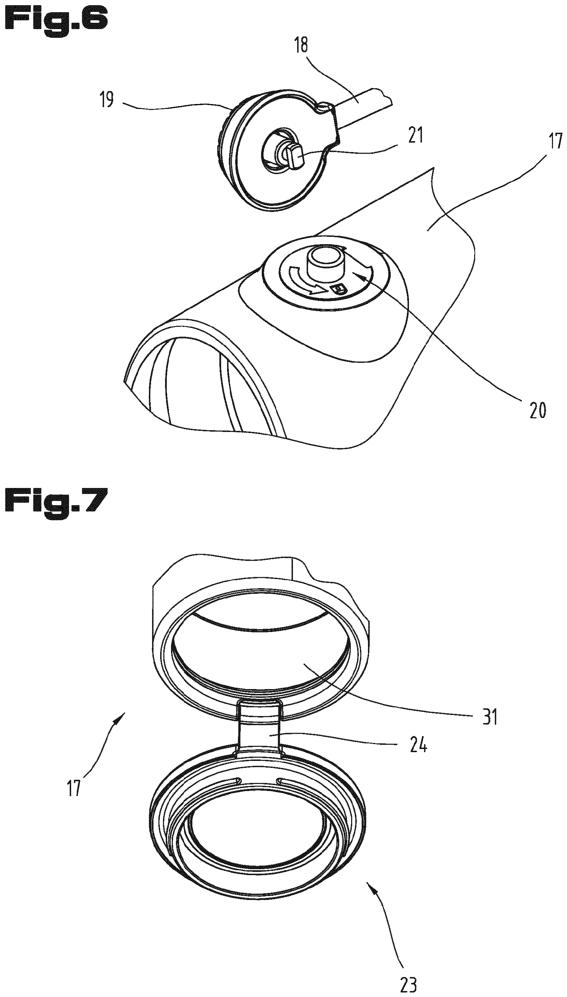

Wie aus Fig. 6 ersichtlich ist, kann an dem Gehäuse 17 ein zur Verbindung mit dem Anbauteil 19 ausgebildetes erstes Schnittstellenelement 20 angeordnet sein, wobei entsprechend der Form des ersten Schnittstellenelementes an dem Anbauteil ein, mit dem ersten Schnittstellenelement verbindbares zweites Schnittstellenelement 21 gedruckt werden kann. An dieser Stelle sei darauf hingewiesen, dass das Gehäuse 17 direkt bedruckt oder auch zu Gänze mittels 3D-Druck hergestellt werden kann.

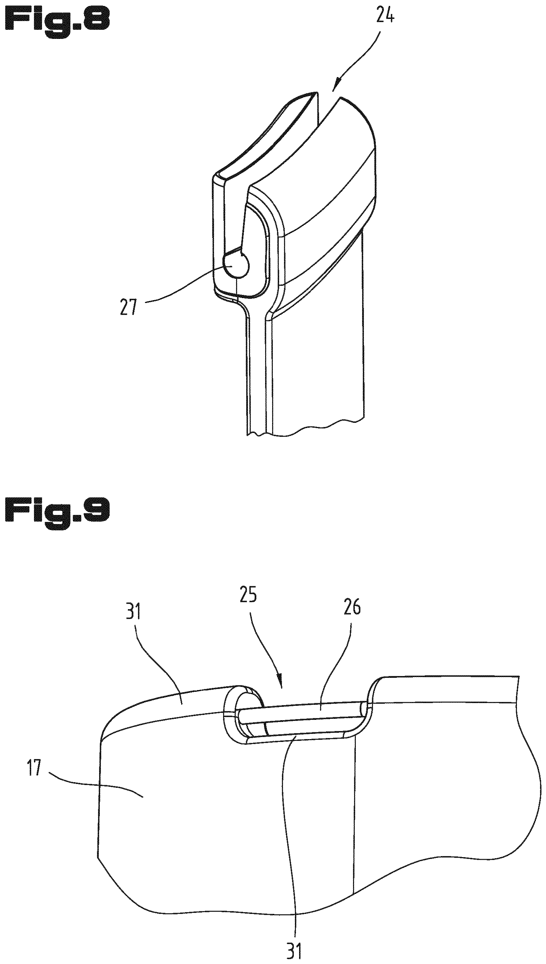

Wie aus Fig. 7 ersichtlich ist, kann es sich bei dem Zubehörteil auch um eine Objektivabdeckung 23 handeln, welche über ein Verbindungsstück 24 an einem am Gehäuse 17 befindlichen Schnittstellenelement 25 an dem Gehäuse 17 befestigt werden kann (Figuren 8 und 9). Das Schnittstellenelement 25 kann als Steg 26, welcher in das Gehäuse 17 oder eine Armierung 31 desselben integriert ist, ausgebildet sein. Das Verbindungsstück 24 kann eine Aufnahme 27 für den Steg 26 aufweisen. Die Aufnahme 27 stellt hierbei ebenfalls ein Schnittstellenelement dar und bildet gemeinsam mit dem Steg 26 eine mechanische Schnittstelle. Alternativ kann die Objektivabdeckung 23 mit dem Steg 26 und dem Verbindungsstück 24 einstückig ausgebildet sein. Zudem kann das Verbindungsstück 24 mit dem Gehäuse 17 oder der Armierung bzw. einem Überzug des Gehäuses 17 einstückig ausgebildet sein, wobei die Objektivabdeckung 23 als separater Bauteil ausgebildet sein kann.

Sowohl das Gehäuse 17 und/oder eine Armierung oder ein Überzug des Gehäuses 17 als auch die Objektivabdeckung 23 sowie der Steg 26 und das Verbindungsstück 24 können mittels 3D Druck hergestellt sein.

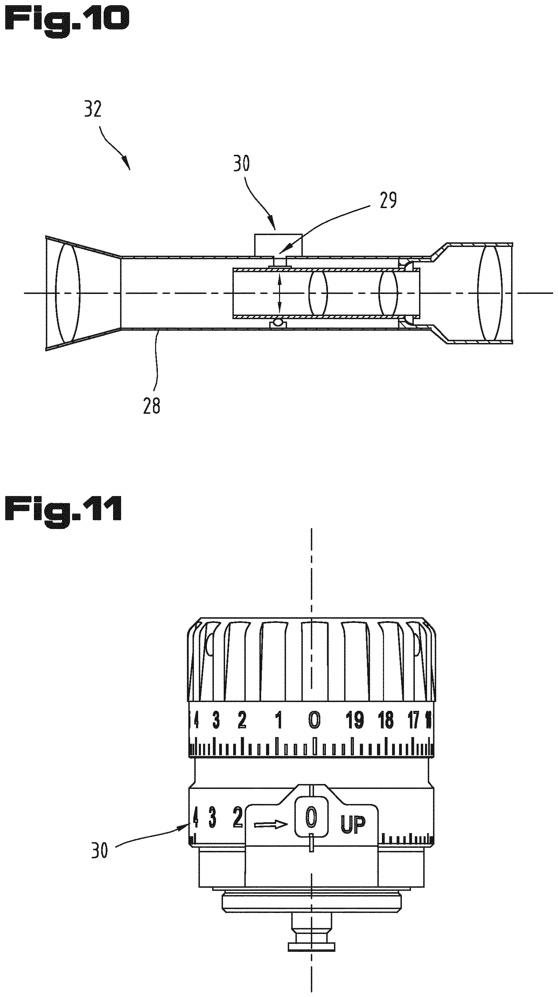

Gemäß der in Fig. 10 dargestellten Variante der Erfindung kann es sich bei der gemäß dem erfindungsgemäßen Verfahren hergestellten fernoptischen Vorrichtung 32 auch um ein Zielfernrohr handeln. Wie aus Figur 10 ersichtlich ist, kann das Gehäuse 28 eine Montageschnittstelle 29 für einen weiteren Bauteil, beispielsweise den in Fig. 11 dargestellten in Form eines Ballistikturms ausgebildeten Bedienteils 30, aufweisen. Die Montageschnittstelle 29 kann beispielsweise auf das Gehäuse 17 aufgedruckt sein. Auch kann es Vorteilhaft sein, wenn eine Schnittstelle zur Montage des Zielffernrohrs an eine Waffe direkt auf das Gehäuse oder mit dem Gehäuse gedruckt werden, wobei die Schnittstelle auf die verwendete Waffe oder den Einsatzzweck oder auf Kundenwünsche speziell abgestimmt wird.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| | | 30 | Bedienteil |
| 1 | Fernoptische Vorrichtung | 31 | Armierung |
| 2 | Bedienteil | | |
| 3 | Gehäuseteil | | |
| 4 | Gehäuseteil | | |
| 5 | Augenmuschel | | |
| 6 | Abstützteil | | |
| 7 | Druckvorrichtung | | |
| 8 | Druckersteuerung | | |
| 9 | Speicher | | |
| 10 | Druckkopf | | |
| 11 | Armierung | | |
| 12 | Fernoptische Vorrichtung | | |
| 13 | Gehäuse | | |
| 14 | Augenmuschel | | |
| 15 | Augenmuschel | | |
| 16 | Bedienelement | | |
| 17 | Gehäuse | | |
| 18 | Tragegurt | | |
| 19 | Anbauteil a | | |
| 20 | Schnittstellenelement | | |
| 21 | Schnittstellenelement | | |
| 22 | Okularabdeckung | | |
| 23 | Objektivabdeckung | | |
| 24 | Verbindungsstück | | |
| 25 | Schnittstellenelement | | |
| 26 | Steg | | |
| 27 | Aufnahme | | |
| 28 | Gehäuse | | |
| 29 | Montageschnittstelle | | |

## Patentansprüche

1. Verfahren zur Herstellung einer fernoptischen Vorrichtung (1)
- in Form eines binokularen oder monokularen Fernrohrs, Teleskopes, Zielfernrohrs, Nachtsichtgerätes oder Entfernungsmessers,
- und eines Teils der fernoptischen Vorrichtung (1) in Form eines Zubehörteils, eines Bedienteils oder eines Gehäuseteils,
- wobei die fernoptische Vorrichtung (1) zumindest ein Gehäuse aufweist,
- wobei die fernoptische Vorrichtung (1) und/oder der herzustellende Teil der fernoptischen Vorrichtung (1) zumindest teilweise mit zumindest einem 3D-Druckverfahren hergestellt wird,
- **dadurch gekennzeichnet, dass** zumindest ein Modell zumindest eines Grundelements der fernoptischen Vorrichtung (1) und/oder des zu druckenden Teils der fernoptischen Vorrichtung (1) in elektronischer Form gespeichert wird,
- wobei eine 3D-Druckvorrichtung anhand des zumindest einen in elektronischer Form gespeicherten Modells gesteuert wird,
- wobei in einem Schritt i) zumindest ein Wert zumindest eines Parameters einer Oberflächenbeschaffenheit und/oder ein Wert zumindest eines die Geometrie des zumindest einen zu druckenden Teils kennzeichnenden Designparameters ausgewählt wird
- und in einem Schritt ii) der zumindest eine zu druckende Teil mit dem 3D-Druckverfahren gedruckt wird,
- wobei anhand der in Schritt i) ausgewählten Parameter eine Vorschau des Erscheinungsbildes des zu druckenden Teils auf einem Bildschirm ausgegeben wird,
- wobei anhand der in Schritt i) ausgewählten Parameter und des zumindest einen Modells des Grundelements der fernoptischen Vorrichtung (1) eine Vorschau auf eine Kombination aus dem Grundelement und dem herzustellenden Teil der fernoptischen Vorrichtung (1) ausgegeben wird.

2. Verfahren nach Anspruch 1, **dadurch gekennzeichnet, dass** das Modell des zumindest einen Grundelements der fernoptischen Vorrichtung und/oder des zumindest einen Zubehörteils und/oder des zumindest einen Bedienteils oder des zumindest einen anderen zu druckenden Teils der fernoptischen Vorrichtung durch Ermitteln einer Oberflächengeometrie zumindest eines als Referenz dienenden Teils der fernoptischen Vorrichtung oder eines als Referenz dienenden Zubehörteils erstellt wird.

3. Verfahren nach Anspruch 2, **dadurch gekennzeichnet, dass** die Oberflächengeometrie durch Abtasten, insbesondere kontaktloses Abtasten, und/oder mittels eines Triangulationsverfahrens und/oder mittels einer Abformvorrichtung ermittelt wird.

4. Verfahren nach einem der Ansprüche 1 bis 3, **dadurch gekennzeichnet, dass** das Modell der Grundform des zumindest einen Elements der fernoptischen Vorrichtung und/oder des zumindest einen Zubehörteils und/oder des zumindest einen Bedienteils und/oder des zumindest einen anderen zu druckenden Teils der fernoptischen Vorrichtung als CAD-Modell erstellt und gespeichert wird.

5. Verfahren nach einem der Ansprüche 1 bis 4, **dadurch gekennzeichnet, dass** in Schritt i) der zumindest eine Wert über ein graphisches User-Interface ausgewählt wird.

6. Verfahren nach einem der Ansprüche 1 bis 5, **dadurch gekennzeichnet, dass** das Gehäuse der fernoptischen Vorrichtung zumindest abschnittsweise mittels des 3D-Druckverfahrens hergestellt wird.

7. Verfahren nach einem der Ansprüche 1 bis 6, **dadurch gekennzeichnet, dass** eine Armierung, insbesondere ein Überzug, für das Gehäuse der fernoptischen Vorrichtung mittels des 3D-Druckverfahrens hergestellt wird.

8. Verfahren nach Anspruch 7, **dadurch gekennzeichnet, dass** die Armierung in zumindest zwei Teilstücken hergestellt wird, und über dem Gehäuse lösbar oder unlösbar zu einem Teil zusammengefügt wird.

9. Verfahren nach Anspruch 6 oder 7, **dadurch gekennzeichnet, dass** die Armierung als Überziehteil hergestellt wird und zumindest abschnittsweise über das Gehäuse gezogen wird.

10. Verfahren nach einem der Ansprüche 6 bis 9, **dadurch gekennzeichnet, dass** die Armierung mit dem Gehäuse kraftschlüssig und/oder formschlüssig verbunden wird.

11. Verfahren nach einem der Ansprüche 1 bis 10, **dadurch gekennzeichnet, dass** zumindest ein Anbauteil für das Gehäuse der fernoptischen Vorrichtung gedruckt und mit dem Gehäuse verbunden wird.

12. Verfahren nach Anspruch 11, **dadurch gekennzeichnet, dass** an dem Gehäuse zumindest ein zur Verbindung mit dem Anbauteil ausgebildetes erstes Schnittstellenelement angeordnet ist, wobei entsprechend der Form des zumindest einen ersten Schnittstellenelementes an dem Anbauteil zumindest ein, mit dem zumindest einen ersten Schnittstellenelement verbindbares zweites Schnittstellenelement gedruckt wird.

13. Verfahren nach einem der Anspruch 11 oder 12, **dadurch gekennzeichnet dass** als Anbauteil der zumindest eine Bedienteil gedruckt wird, wobei der Bedienteil zur Veränderung einer optischen Einstellung der fernoptischen Vorrichtung, insbesondere zur Veränderung einer Dioptrieneinstellung, eines Fokus oder einer Vergrößerung der fernoptischen Vorrichtung ausgebildet ist.

14. Verfahren nach einem der Ansprüche 11 bis 13, **dadurch gekennzeichnet, dass** als Anbauteil der zumindest eine Bedienteil in Form eines Druckknopfs und/oder eines Drehknopfs und/oder eines Schalters und/oder eines Ballistikturms und/oder Bestandteil eines Ballistikturms gedruckt wird.

15. Verfahren nach einem der Ansprüche 1 bis 14, **dadurch gekennzeichnet, dass** zumindest ein anatomisch geformter Kontaktteil oder Halteteil, insbesondere eine Augenmuschel und/oder ein Griff- und/oder eine Griffschale, der fernoptischen Vorrichtung für einen Benutzer hergestellt wird, wobei zur Herstellung des Kontaktteils eine anatomische Ist-Form eines mit der fernoptischen Vorrichtung in Kontakt tretenden Körperteils des Benutzers ermittelt und ein bei Benutzung der fernoptischen Vorrichtung an dem Körperteil anliegender Kontaktabschnitt des Kontaktteils entsprechend der anatomischen Ist-Form gedruckt wird.

16. Verfahren nach Anspruch 15, **dadurch gekennzeichnet, dass** eine Oberflächengeometrie des Körperteils ermittelt wird, um die anatomische Ist-Form festzustellen.

17. Verfahren nach Anspruch 16, **dadurch gekennzeichnet, dass** die Oberflächengeometrie des Körperteils durch Abtasten, insbesondere kontaktloses Abtasten, und/oder mittels eines Triangulationsverfahrens und/oder mittels einer Abformvorrichtung ermittelt wird.

18. Verfahren nach einem der Ansprüche 3 bis 17, **dadurch gekennzeichnet, dass** die Abformvorrichtung zum Abformen des Körperteils und/oder des zumindest einen Grundelements der fernoptischen Vorrichtung und/oder des zumindest einen Zubehörteils und/oder des zumindest einen Bedienteils und/oder des zumindest einen anderen zu druckenden Teils der fernoptischen Vorrichtung einen nicht reversibel verformbarer Abdruckkörper, insbesondere ein Formschaum, Gelkissen oder ein Gipskissen, umfasst, wobei der Abdruckkörper in eine Negativform der Ist-Form umgeformt wird.

19. Verfahren nach Anspruch 18, **dadurch gekennzeichnet, dass** die Oberflächengeometrie des zumindest einen Körperteils und/oder des zumindest einen Grundelements der fernoptischen Einrichtung und/oder des Zubehörteils und/oder des zumindest einen Bedienteils und/oder des zumindest einen anderen zu druckenden Teils der fernoptischen Vorrichtung durch Abtasten des Abdruckkörpers erfolgt.

20. Verfahren nach Anspruch 18 oder 19, **dadurch gekennzeichnet, dass** die Oberflächengeometrie durch Abtasten des Abdruckkörpers kontaktlos, insbesondere mittels eines Lichtschnittverfahrens, ermittelt wird.

21. Verfahren nach einem der Ansprüche 18 bis 20, **dadurch gekennzeichnet, dass** die Abformvorrichtung einen kraftsensitiven Abdruckkörper umfasst, insbesondere einen Abdruckkörper mit einem Kraftsensor, der eine auf den Kraftsensor einwirkende Kraft, in eine elektrische Kenngröße umwandelt, insbesondere ein piezoelektrischer und/oder resistiver und/oder kapazitiver Kraftsensor.

22. Verfahren nach einem der Ansprüche 18 bis 21, **dadurch gekennzeichnet, dass** der Abdruckkörper eine Anordnung von Tastelementen aufweist.

23. Verfahren nach Anspruch 18 bis 22, **dadurch gekennzeichnet, dass** der Abdrucckörper einen transparenten, elastisch deformierbaren Volumenkörper umfasst, wobei von einer im Abdruckkörperinneren angeordneten optischen Abtastvorrichtung, Triangulationspunkte der inneren Oberflächengeometrie des Abdruckkörpers erfasst werden.

24. Verfahren nach einem der Ansprüche 18 bis 23, **dadurch gekennzeichnet, dass** der kraftsensitive Abdruckkörper einen transparenten, nicht deformierbaren Volumenkörper umfasst, wobei von einer im Abdruckkörperinneren angeordneten optischen Bilderfassungsvorrichtung ein Abdruckbild an der Außenfläche des Abdruckkörpers erfasst wird.

25. Verfahren nach einem der Ansprüche 1 bis 24, **dadurch gekennzeichnet, dass** das Gehäuse direkt mittels des 3D-Druckverfahrens bedruckt wird.

26. Verfahren nach einem der Ansprüche 1 bis 25, **dadurch gekennzeichnet, dass** an oder auf das Gehäuse eine Montageschnittstelle für einen weiteren Bauteil aufgedruckt wird.

27. Verfahren nach einem der Ansprüche 1 bis 26, **dadurch gekennzeichnet, dass** das 3D-Druckverfahren ein Freiraumverfahren oder ein Pulverbettverfahren ist.

28. Verfahren nach einem der Ansprüche 1 bis 27, **dadurch gekennzeichnet, dass** das 3D-Druckverfahren ein Freiraumverfahren mit einem volumenveränderlichen Material ist.

29. Verfahren nach einem der Ansprüche 1 bis 28, **dadurch gekennzeichnet, dass** das zumindest eine 3D-Druckverfahren ein Laserschmelzverfahren und/oder ein Elektronenschmelzverfahren und/oder ein Stereolithographieverfahren und/oder ein Digital Light Processing Verfahren und/oder Polyjet Modelling Verfahren und/oder Fused Deposition Modelling Verfahren und/oder ein Multi Jet Modelling Verfahren und/oder ein Binder Jetting Verfahren und/oder ein Laserauftragschweißverfahren und/oder ein Kaltgasspritzverfahren umfasst.

30. Verfahren nach einem der Ansprüche 1 bis 29, **dadurch gekennzeichnet, dass** die gesamte fernoptische Vorrichtung durch das zumindest eine 3D-Druckverfahren hergestellt ist.

31. Verfahren nach einem der Ansprüche 1 bis 30, **dadurch gekennzeichnet, dass** das 3D-Druckverfahren in einem abgeschlossenen Bereich unter anderen atmosphärischen Bedingungen, wie Druck, Temperatur, Luftfeuchtigkeit, Gaszusammensetzung, als jenen einer Umgebungsatmosphäre erfolgt.

## Claims

1. A method for producing a long-range optical device (1)
- in the form of a binocular or monocular telescope, spotting scope, riflescope, night-vision device or rangefinder,
- and for producing a part of the long-range optical device (1) in the form of an accessory part, an operating part or a housing part,
- wherein the long-range optical device (1) comprises at least one housing,
- wherein the long-range optical device (1) and/or the part of the long-range optical device (1) to be produced is at least partly produced using at least one 3D printing method,
- **characterized in that** at least one model of at least one basic element of the long-range optical device (1) and/or of the part of the long-range optical device (1) to be printed is stored in electronic form,
- wherein a 3D printing device is controlled by means of the at least one model stored in electronic form,
- wherein in a step i) at least one value of at least one parameter of a surface condition and/or a value of at least one design parameter characterizing the geometry of the at least one part to be printed is selected,
- and in a step ii) the at least one part to be printed is printed using the 3D printing method,
- wherein a preview of the appearance of the part to be printed is output on a screen on the basis of the parameters selected in step i),
- wherein a preview of a combination of the basic element and the part of the long-range optical device (1) to be produced is output on the basis of the parameters selected in step i) and the at least one model of the basic element of the long-range optical device (1).

2. The method according to claim 1, **characterized in that** the model of the at least one basic element of the long-range optical device and/or the at least one accessory part and/or the at least one operating part or the at least one other part of the long-range optical device that is to be printed is created by determining a surface geometry of at least one part of the long-range optical device that is used as a reference or an accessory part that is used as a reference.

3. The method according to claim 2, **characterized in that** the surface geometry is determined by scanning, in particular contact-free scanning, and/or by means of a triangulation method and/or by means of a molding device.

4. The method according to one of claims 1 to 3, **characterized in that** the model of the basic shape of the at least one element of the long-range optical device and/or the at least one accessory part and/or the at least one operating part and/or the at least one other part of the long-range optical device that is to be printed is created as a CAD model and is stored.

5. The method according to one of claims 1 to 4, **characterized in that** in step i) the at least one value is selected over a graphical user interface.

6. The method according to one of claims 1 to 5, **characterized in that** the housing of the long-range optical device is produced at least in sections by means of the 3D printing method.

7. The method according to one of claims 1 to 6, **characterized in that** an armoring, in particular a casing, for the housing of the long-range optical device is produced by means of the 3D printing method.

8. The method according to claim 7, **characterized in that** the armoring is produced in at least two pieces and is assembled in a releasable and non-releasable manner via the housing to form one part.

9. The method according to claim 6 or 7, **characterized in that** the armoring is produced as a covering part and is pulled over the housing at least in certain sections.

10. The method according to one of claims 6 to 9, **characterized in that** the armoring is connected to the housing in a force fitting and/or shape fitting manner.

11. The method according to one of claims 1 to 10, **characterized in that** at least one add-on part for the housing of the long-range optical device is printed and connected to the housing.

12. The method according to claim 11, **characterized in that** at least one first interface element, which is configured for connecting to the add-on part, is disposed on the housing, wherein at least one second interface element, which can be connected to the at least one first interface element, is printed in accordance with the shape of the at least one first interface element on the add-on part.

13. The method according to one of claims 11 or 12, **characterized in that** the at least one operating part is printed as an add-on part, wherein the operating part is configured for changing an optical adjustment of the long-range optical device, in particular for changing a diopter adjustment, a focus or a magnification of the long-range optical device.

14. The method according to one of claims 11 to 13, **characterized in that** the at least one operating part is printed as an add-on part in the form of a push button and/or a rotary knob and/or a switch and/or a ballistic turret and/or component of a ballistic turret.

15. The method according to one of claims 1 to 14, **characterized in that** at least one anatomically shaped contact part or holding part, in particular an eye cup and/or a grip and/or a grip shell, of the long-range optical device is produced for a user, wherein in order to produce the contact part an actual anatomical shape of a body part of the user that comes into contact with the long-range optical device is determined, and a contact section of the contact part that rests against the body part when the long-range optical device is used is printed according to the actual anatomical shape.

16. The method according to claim 15, **characterized in that** a surface geometry of the body part is determined in order to ascertain the actual anatomical shape.

17. The method according to claim 16, **characterized in that** the surface geometry of the body part is determined by scanning, in particular contact-free scanning, and/or by means of a triangulation method and/or by means of a molding device.

18. The method according to one of claims 3 to 17, **characterized in that** the molding device for molding the body part and/or the at least one basic element of the long-range optical device and/or the at least one accessory part and/or the at least one operating part and/or the at least one other part of the long-range optical device that is to be printed comprises an irreversibly deformable impression body, in particular a molding foam, gel cushion or a gypsum cushion, wherein the impression body is reshaped into a negative shape of the actual shape.

19. The method according to claim 18, **characterized in that** the surface geometry of the at least one body part and/or the at least one basic element of the long-range optical device and/or the accessory part and/or the at least one operating part and/or the at least one other part of the long-range optical device that is to be printed takes place by scanning the impression body.

20. The method according to claim 18 or 19, **characterized in that** the surface geometry is determined by scanning the impression body in a contact-free manner, in particular by means of a light slit method.

21. The method according to one of claims 18 to 20, **characterized in that** the molding device comprises a force sensitive impression body, in particular an impression body with a force sensor, which converts a force acting on the force sensor into an electrical parameter, in particular a piezoelectric and/or resistive and/or capacitive force sensor.

22. The method according to one of claims 18 to 21, **characterized in that** the impression body comprises an arrangement of touch elements.

23. The method according to one of claims 18 to 22, **characterized in that** the impression body comprises a transparent, elastically deformable volumetric body, wherein triangulation points of the inner surface geometry of the impression body are recorded by an optical scanning device arranged in the impression body interior.

24. The method according to one of claims 18 to 23, **characterized in that** the force sensitive impression body comprises a transparent, non-deformable volumetric body, wherein an impression image of the outer surface of the impression body is recorded by an optical imaging device disposed in the impression body interior.

25. The method according to one of claims 1 to 24, **characterized in that** the housing is printed on directly by means of the 3D printing method.

26. The method according to one of claims 1 to 25, **characterized in that** a mounting interface for a further component is printed at or on the housing.

27. The method according to one of claims 1 to 26, **characterized in that** the 3D printing method is a free space method or a powder bed method.

28. The method according to one of claims 1 to 27, **characterized in that** the 3D printing method is a free space method with a volume variable material.

29. The method according to one of claims 1 to 28, **characterized in that** the at least one 3D printing method comprises a laser beam melting method and/or an electronic beam melting method and/or a stereolithography method and/or a digital light processing method and/or a polyjet modeling method and/or fused deposition modeling method and/or a multi-jet modeling method and/or a binder jetting method and/or a laser deposition welding method and/or a cold gas spraying method.

30. The method according to one of claims 1 to 29, **characterized in that** the whole long-range optical device is produced by the at least one 3D printing method.

31. The method according to one of claims 1 to 30, **characterized in that** the 3D printing method is carried out in a closed region under different atmospheric conditions, such as pressure, temperature, humidity, gas composition, than those of an ambient atmosphere.

## Revendications

1. Procédé de fabrication d'un dispositif téléoptique (1)
- sous la forme d'une lunette, d'un télescope, d'une lunette de visée, d'un appareil de vision nocturne ou d'un télémètre binoculaire ou monoculaire,
- et d'une partie du dispositif téléoptique (1) sous la forme d'un accessoire, d'un élément de commande ou d'une partie de boîtier,
- dans lequel le dispositif téléoptique (1) comprend au moins un boîtier,
- dans lequel le dispositif téléoptique (1) et/ou la partie à fabriquer du dispositif téléoptique (1) est fabriqué au moins partiellement avec au moins un procédé d'impression 3D,
- **caractérisé en ce qu'**au moins un modèle d'au moins un élément de base du dispositif téléoptique (1) et/ou de la partie à imprimer du dispositif téléoptique (1) est enregistré sous forme électronique,
- dans lequel un dispositif d'impression 3D est contrôlé à l'aide de l'au moins un modèle enregistré sous forme électronique,
- dans lequel, à l'étape i), au moins une valeur d'au moins un paramètre d'une qualité de surface et/ou une valeur d'un paramètre de conception caractérisant la géométrie de l'au moins une partie à imprimer est sélectionnée,
- et, à l'étape ii), l'au moins une partie à imprimer est imprimée avec le procédé d'impression 3D,
- dans lequel, à l'aide des paramètres sélectionnés à l'étape i), une prévisualisation de l'aspect de la partie à imprimer est affichée sur un écran,
- dans lequel, à l'aide des paramètres sélectionnés à l'étape i) et de l'au moins un modèle de l'élément de base du dispositif téléoptique (1), une prévisualisation d'une combinaison de l'élément de base et de la partie à fabriquer du dispositif téléoptique (1) est affichée.

2. Procédé selon la revendication 1, **caractérisé en ce que** le modèle de l'au moins un élément de base du dispositif téléoptique et/ou de l'au moins un accessoire et/ou de l'au moins un élément de commande ou de l'au moins une autre partie à imprimer du dispositif téléoptique est créé en déterminant une géométrie de surface d'au moins une partie du dispositif téléoptique servant de référence ou d'un accessoire servant de référence.

3. Procédé selon la revendication 2, **caractérisé en ce que** la géométrie de surface est déterminée par palpation, plus particulièrement par palpation sans contact et/ou au moyen d'un procédé de triangulation et/ou au moyen d'un dispositif de moulage.

4. Procédé selon l'une des revendications 1 à 3, **caractérisé en ce que** le modèle de la forme de base de l'au moins un élément du dispositif téléoptique et/ou de l'au moins un accessoire et/ou de l' au moins un élément de commande et/ou de l' au moins une autre partie à imprimer du dispositif téléoptique est créé et enregistré sous la forme d'un modèle CAO.

5. Procédé selon l'une des revendications 1 à 4, **caractérisé en ce que**, à l'étape i), l'au moins une valeur est sélectionnée par l'intermédiaire d'une interface utilisateur graphique.

6. Procédé selon l'une des revendications 1 à 5, **caractérisé en ce que** le boîtier du dispositif téléoptique est fabriqué, au moins partiellement, au moyen du procédé d'impression 3D.

7. Procédé selon l'une des revendications 1 à 6, **caractérisé en ce qu'**une armature, plus particulièrement un revêtement, pour le boîtier du dispositif téléoptique est fabriqué au moyen du procédé d'impression 3D.

8. Procédé selon la revendication 7, **caractérisé en ce que** l'armature est fabriquée en au moins deux parties et est assemblée au-dessus du boîtier de manière amovible ou inamovible en une partie.

9. Procédé selon la revendication 6 ou 7, **caractérisé en ce que** l'armature est fabriquée sous la forme d'une partie à enfiler et est enfilée au moins partiellement sur le boîtier.

10. Procédé selon l'une des revendications 6 à 9, **caractérisé en ce que** l'armature est reliée avec le boîtier par force et/ou par complémentarité de forme.

11. Procédé selon l'une des revendications 1 à 10, **caractérisé en ce qu'**au moins une pièce rapportée pour le boîtier du dispositif téléoptique est imprimée et reliée avec le boîtier.

12. Procédé selon la revendication 11, **caractérisé en ce que**, sur le boîtier, est disposé au moins un premier élément d'interface conçu pour être relié avec la pièce rapportée, dans lequel, en fonction de la forme de l'au moins un premier élément d'interface, au moins un deuxième élément d'interface, pouvant être relié avec l'au moins un premier élément d'interface, est imprimé sur la pièce rapportée.

13. Procédé selon l'une des revendications 11 ou 12, **caractérisé en ce que** la pièce rapportée imprimée est l'au moins un élément de commande, dans lequel l'élément de commande est conçu pour modifier un réglage optique du dispositif téléoptique, plus particulièrement pour modifier un réglage de dioptrie, une focalisation ou un agrandissement du dispositif téléoptique.

14. Procédé selon l'une des revendications 11 à 13, **caractérisé en ce que** la pièce rapportée imprimée est l'au moins un élément de commande sous la forme d'un bouton poussoir et/ou d'un bouton rotatif et/ou d'un commutateur et/ou d'une tourelle balistique et/ou d'un composant d'une tourelle balistique.

15. Procédé selon l'une des revendications 1 à 14, **caractérisé en ce qu'**au moins une partie de contact ou pièce de maintien de forme anatomique, plus particulièrement un oeilleton et/ou une poignée et/ou une coque de poignée, du dispositif téléoptique est fabriquée pour un utilisateur, dans lequel, pour la fabrication de la pièce de contact, une forme anatomique réelle d'une partie du corps de l'utilisateur, entrant en contact avec le dispositif téléoptique et une portion de contact de la pièce de contact, s'appuyant contre la partie du corps lors de l'utilisation du dispositif téléoptique, est imprimée selon la forme anatomique réelle.

16. Procédé selon la revendication 15, **caractérisé en ce qu'**une géométrie de surface de la partie du corps est déterminée afin de fixer la forme anatomique réelle.

17. Procédé selon la revendication 16, **caractérisé en ce que** la géométrie de surface de la partie du corps est déterminée par palpation, plus particulièrement par palpation sans contact et/ou au moyen d'un procédé de triangulation et/ou au moyen d'un dispositif de moulage.

18. Procédé selon l'une des revendications 3 à 17, **caractérisé en ce que** le dispositif de moulage pour le moulage de la partie du corps et/ou de l'au moins un élément de base du dispositif téléoptique et/ou de l'au moins un accessoire et/ou de l'au moins un élément de commande et/ou de l'au moins une autre partie à imprimer du dispositif téléoptique comprend un corps d'empreinte déformable de manière irréversible, plus particulièrement une mousse de formage, un coussinet de gel ou un coussinet de plâtre, dans lequel le corps d'empreinte est façonné en une forme négative de la forme réelle.

19. Procédé selon la revendication 18, **caractérisé en ce que** la géométrie de surface de l'au moins une partie du corps et/ou de l'au moins un élément de base du dispositif téléoptique et/ou de l'accessoire et/ou de l'au moins un élément de commande et/ou de l'au moins une autre partie à imprimer du dispositif téléoptique a lieu par palpation du corps d'empreinte.

20. Procédé selon la revendication 18 ou 19, **caractérisé en ce que** la géométrie de surface est déterminée par palpation du corps d'empreinte sans contact, plus particulièrement au moyen d'un procédé de section lumineuse.

21. Procédé selon l'une des revendications 18 à 20, **caractérisé en ce que** le dispositif de moulage comprend un corps d'empreinte sensible à la force, plus particulièrement un corps d'empreinte avec un capteur de force qui convertit une force agissant sur le capteur de force en une grandeur caractéristique électrique, plus particulièrement un capteur de force piézoélectrique et/ou résistif et/ou capacitif.

22. Procédé selon l'une des revendications 18 à 21, **caractérisé en ce que** le corps d'empreinte comprend une disposition d'éléments de palpation.

23. Procédé selon l'une des revendications 18 à 22, **caractérisé en ce que** le corps d'empreinte comprend un corps de volume transparent, déformable élastiquement, dans lequel un dispositif de palpation optique disposé à l'intérieur du corps d'empreinte permet de relever des points de triangulation de la géométrie de surface interne du corps d'empreinte.

24. Procédé selon l'une des revendications 18 à 23, **caractérisé en ce que** le corps d'empreinte sensible à la force comprend un corps de volume transparent, non déformable, dans lequel un dispositif d'imagerie optique disposé à l'intérieur du corps d'empreinte permet de relever une image d'empreinte sur la surface externe du corps d'empreinte.

25. Procédé selon l'une des revendications 1 à 24, **caractérisé en ce que** le boîtier est imprimé directement au moyen du procédé d'impression 3D.

26. Procédé selon l'une des revendications 1 à 25, **caractérisé en ce que**, au niveau ou sur le boîtier, est imprimée une interface de montage pour un composant supplémentaire.

27. Procédé selon l'une des revendications 1 à 26, **caractérisé en ce que** le procédé d'impression 3D est un procédé à espace libre ou un procédé à lit pulvérulent.

28. Procédé selon l'une des revendications 1 à 27, **caractérisé en ce que** le procédé d'impression 3D est un procédé à espace libre avec un matériau à volume variable.

29. Procédé selon l'une des revendications 1 à 28, **caractérisé en ce que** l'au moins un procédé d'impression 3D comprend un procédé de fusion par laser et/ou un procédé de fusion à électrons et/ou un procédé de stéréolithographie et/ou un procédé « Digital Light Processing » et/ou un procédé « Polyjet Modelling » et/ou un procédé « Fused Déposition Modelling » et/ou un procédé « Multi Jet Modelling » et/ou un procédé « Binder Jetting » et/ou un procédé de soudure laser par recouvrement et/ou un procédé d'injection de gaz froid.

30. Procédé selon l'une des revendications 1 à 29, **caractérisé en ce que** tout le dispositif téléoptique est fabriqué au moyen de l'au moins un procédé d'impression 3D.

31. Procédé selon l'une des revendications 1 à 30, **caractérisé en ce que** le procédé d'impression 3D a lieu dans une zone fermée dans des conditions atmosphériques, telles que la pression, la température, l'humidité de l'air, la composition du gaz, différentes de celles d'une atmosphère ambiante.
